# EUROPÄISCHE PATENTSCHRIFT

(11) **EP 0 749 698 B1**
(45) Veröffentlichungstag und Bekanntmachung des Hinweises auf die Patenterteilung: **05.03.2003**
(21) Anmeldenummer: 96110095.5
(22) Anmeldetag: 21.06.1996
(51) Int. Cl.: A23P 1/08, A23K 1/00, A23G 3/00, A23G 3/26

(54) **Beschichtetes Lebens- oder Futtermittel-Halb- oder -Endprodukt**
Coated product or half-product, as food- or feedstuff
Produit enrobé, fini ou semi-fini, destiné à l'alimentation animale ou humaine

(30) Priorität: 22.06.1995 DE 19522701
(43) Veröffentlichungstag der Anmeldung: 27.12.1996
(73) Patentinhaber: Enzensperger, Peter, D-86956 Schongau (DE)
(72) Erfinder: Enzensperger, Peter, D-86956 Schongau (DE)
(74) Vertreter: Popp, Eugen, Dr.

(56) Entgegenhaltungen:
- WO-A-89/04121
- WO-A-94/27445
- BE-A- 672 006
- US-A- 3 615 676
- US-A- 3 833 747
- US-A- 3 989 853
- US-A- 4 499 113
- US-A- 5 208 055
- PATENT ABSTRACTS OF JAPAN vol. 015, no. 221 (C-0838), 6.Juni 1991 & JP 03 067554 A (BIEICHIYOU NOGYO KYODO KUMIAI), 22.März 1991,
- PATENT ABSTRACTS OF JAPAN vol. 011, no. 043 (C-402), 7.Februar 1987 & JP 61 209556 A (TOYO SUISAN KK), 17.September 1986,
- PATENT ABSTRACTS OF JAPAN vol. 095, no. 009, 31.Oktober 1995 & JP 07 147888 A (SANKAI:KK), 13.Juni 1995,

## Beschreibung

Die Erfindung betrifft ein Lebens- oder Futtermittel-Halboder -Endprodukt, bestehend aus einem stückförmigen oder grobkörnigen Trägermaterial, welches mit einem eßbaren Überzug versehen ist.

Derartige Produkte sind allgemein bekannt. Der Überzug besteht in der Regel aus Zuckerguß oder einem aus wasserlöslichen Alginaten bestehenden gelbildenden Material entsprechend der Beschreibung in der DE 22 20 528 B2. In der JP-A 63-94961 ist vorgeschlagen, flockige, blättrige oder körnige Lebens- oder Futtermittel mit einem Überzug aus Zuckersirup zu versehen, um dann auf diesen pulvrige Additive aufzubringen, die dann mit einem weiteren Zuckersirup versiegelt werden. Als Additiv dient z. B. feinpulvriges Protein.

In der US-A 4 755 390 ist ein Verfahren zur Beschichtung von Getreidepräparaten mit geschmacksverbessernden Mitteln beschrieben, die durch Milch, Fruchtsäfte oder dgl. aufgelöst werden. Derartig behandelte Getreidepräparate werden bevorzugt als Frühstückskost angeboten und verzehrt.

Schließlich sei noch auf die WO 94/27445 verwiesen, in der ein Verfahren zur Herstellung eines rieselfähigen Backwaren-Zutatenverbundes beschrieben ist, welcher als Halbfabrikat bei der Herstellung von Backwaren, kalt- oder warmgebundenen, halb- oder gefrorenen Nahrungs- oder Genußmitteln verwendet wird und wlecher aus mindestens einer Art von partikelartigen, insbesondere körnigen oder stückigen Grobstoffen einerseits sowie mindestens einer Art von geschmacksbeeinflussenden, die Verarbeitungsfähigkeit des herzustellenden Endproduktes fördernden, die Haltbarkeit des Backwaren-Zutatenverbundes bzw. des Endprodukts verlängernden, die Geschmacksvielfalt erweiternden oder dgl. Feinstoffen oder Zutaten andererseits besteht, wobei die Feinstoffe mittels eines wasserlöslichen Haftmittels an der Oberfläche der Grobstoffe haften. Ein solcher Zutatenverbund hat sich in der Praxis bereits bewährt. Als schnellösliches Instant-Produkt sowie als Produkt für den unmittelbaren Verzehr ist der bekannte Backwaren-Zutatenverbund weder geeignet oder bestimmt.

Der vorliegenden Erfindung liegt die Aufgabe zugrunde, ein entmischungssicheres Lebens- oder Futtermittel-Halb- oder -Endprodukt der eingangs genannten Art zu schaffen, welches als Endprodukt verzehrfähig und als Halbprodukt in Wasser, Milch oder dgl. zur Herstellung eines Endprodukts auflösbar ist, und welches problemlos über einen längeren Zeitraum auch bei normalen Temperaturen lagerbar ist, d. h. sich durch eine hohe Haltbarkeit auszeichnet. Des weiteren ist es Aufgabe der vorliegenden Erfindung, ein Verfahren zur Herstellung eines derartigen Lebens- oder Futtermittel-Produktes zu schaffen sowie eine bevorzugte Verwendung dafür anzugeben.

Diese Aufgabe wird hinsichtlich des Produkts durch die Merkmale des Anspruches 1, hinsichtlich des Herstellungsverfahrens durch die Merkmale des Anspruches 5 und hinsichtlich der bevorzugten Verwendung durch die Merkmale des Anspruches 17 gelöst.

Der Kern der vorliegenden Erfindung liegt in der Ausbildung eines "aufgepoppten" Überzugs, der sich durch Offenporigkeit auszeichnet und dementsprechend geeignet ist, innerhalb kürzester Zeit Feuchtigkeit aufzunehmen und sich dabei aufzulösen. Bei Verwendung von verzehrfähigen, insbesondere gegarten Ausgangsprodukten ist das Endprodukt unmittelbar verzehrbar. Bei Verwendung ungegarter, gegarter, modifizierter oder verzehrfähiger Ausgangsprodukte erhält man ein Lebens- oder Futtermittel-Halbprodukt, welches erst nach Auflösung in kaltem oder heißem Lösungsmedium, wie z. B. Wasser, Milch, Sahne, Joghurt, Käsesubstrat oder dgl. zu einem Endprodukt wird. Das erfindungsgemäß hergestellte Halbprodukt stellt somit ein sogenanntes Instantprodukt dar, welches sich aufgrund der hohen Kapillarität des Überzuges durch eine hohe Löslichkeit und damit entsprechend geringe Zubereitungszeit auszeichnet. Bei Verwendung eines erfindungsgemäßen Lebens- oder Futtermittel-Halbproduktes für die Herstellung einer heißquellenden Fruchtfüllung ist ein Aufkochen des Halbprodukts von nur etwa einer Minute ausreichend. Die im porigen Überzug enthaltene Stärke sinkt beim Aufkochen nur langsam ab mit der Folge, daß ein starkes Rühren entbehrlich wird.

Die erfindungsgemäß hergestellten Produkte zeichnen sich darüber hinaus dadurch aus, daß sie als Trockenprodukte nicht notwendigerweise kühl gelagert werden müssen. Die Lagerung der erfindungsgemäßen Lebens- oder Futtermittel-Produkte wird dementsprechend erheblich vereinfacht, insbesondere für Gaststätten- und Restaurantbetriebe sowie Kantinen. Auch eignen sich die erfindungsgemäßen Lebens- oder Futtermittel-Halb- und -Fertigfabrikate besonders gut für warme Gegenden, in denen die gekühlte Lagerung nicht oder nur schwer möglich ist.

Die Produkte gemäß Erfindung zeichnen sich durch eine exakte Rezeptur aus, die dauerhaft erhalten bleibt. Dementsprechend kann auch die Dosierung für die Herstellung eines Endprodukts unter Verwendung erfindungsgemäß hergestellter Halbprodukte exakt vorgegeben werden.

Überraschenderweise sind die porigen Überzüge gemäß der vorliegenden Erfindung äußerst abriebfest. Sie können zusätzlich durch eine Zuckerschicht aromaversiegelt sein, sofern sich dies als zweckmäßig oder notwendig herausstellen sollte.

Die erfindungsgemäßen Produkte zeichnen sich auch noch durch eine exakte Funktionserfüllung, z. B. Quellung in kaltem oder heißem Lösungsmedium, Auflösung im Mund oder dgl. aus. Dies hängt zum einen mit der hohen Kapillarität und zum anderen mit der exakten Zusammensetzung des Überzuges stückiger oder grobkörniger Lebens- oder Futtermittel zusammen. Der erfindungsgemäß vorgesehene Überzug verhindert auch enzymatische, biologische oder bakterielle Reaktionen.

Sofern es auf kurze Lösungszeiten des Produktes nicht ankommt, kann auf das erwähnte "Aufpoppen" des Überzugs verzichtet werden. In diesem Fall spielt die Kapillarität des Überzuges keine Rolle. Auch diese Ausführungsform wird als erfindungswesentlich beansprucht.

Zur Klassifizierung des erfindungsgemäßen Lebens- oder Futtermittel-Produkts ist von Bedeutung, daß dieses eine Restfeuchte von nicht mehr als etwa 2 bis 8%, insbesondere etwa 3 bis 5% besitzt.

Des weiteren ist erwähnenswert, daß der Überzug wenigstens zwei Schichten gleicher oder unterschiedlicher Konsistenz, insbesondere Zusammensetzung von Feinstoffen umfaßt. In der Regel ist der Überzug mehrschichtig, wobei jede Schicht unterschiedliche Ingredienzien aufweisen kann. Die einzelnen Schichten können geschmacksverbessernd, säureresistent, die Löslichkeit fördernd oder dgl. ausgebildet sein. Sie können auch als Flüssigkeits-Sperrschicht bei unmittelbarem Auftrag auf die Oberfläche des Trägermaterials dienen. Dies ist insbesondere dann von Bedeutung, wenn als Trägermaterial naturbelassene Lebens- oder Futtermittel verwendet werden, wie z. B. Walnußstücke als Teil eines Walnuß-Speiseeises. In diesem Fall werden die Walnußstücke zunächst mit einer wasserundurchlässigen Hartfettschicht überzogen. Anschließend erfolgt der offenporige Überzug mit den Zutaten für die Ausbildung eines Speiseeises in Verbindung mit Wasser oder Milch.

Das Trägermaterial kann auch mit einer ersten Schicht aus Enzym- und/oder Bakterienkompounds überzogen sein, welche mit einer bis zu einem gewissen pH-Wert säureresistenten Proteinschicht und/oder einer Fettschicht, deren Schmelzpunkt auf die Lösungstemperatur eingestellt ist, überzogen und dadurch einer Fermentation von Beginn an zugegeben werden können. Als stückförmiges Trägermaterial können Komprimate bzw. Agglomerate aus Maltodextrin oder dgl. lebens- oder futtermitteltechnische Produkte Anwendung finden.

Die erwähnten Sperrschichten dienen vor allem auch zur zeitlich definierten Einstellung der Auflösung des erfindungsgemäßen Lebens- oder Futtermittel-Produkts in flüssigem Medium. Darüber hinaus dienen sie zum Schutz des Trägermaterials vor Erweichung.

Neben dem bereits erwähnten Trägermaterial eignen sich dafür alle Arten von dehydrierten Lebens- oder Futtermittelstücken, insbesondere getrocknete und/oder kandierte Früchte, getrocknete Fleisch-, Fisch- oder Gemüsestücke oder Mischungen davon. Bei naturbelassenen Lebens- oder Futtermitteln sollte darauf geachtet werden, daß diese einen niedrigen Wassergehalt aufweisen, so daß keine Auflösung des erfindungsgemäßen Produkts von innen heraus erfolgt. Eine solche Auflösung von innen heraus könnte jedoch ebenso mit der bereits erwähnten Flüssigkeits-Sperrschicht, z. B. Hartfettschicht, verhindert werden.

Die pulverförmigen Feinstoffe für den Überzug enthalten insbesondere Stärke. Sie können zusätzlich Aroma- und Geschmacksstoffe, Quellmittel, Dickungsmittel, Emulgatoren, Vitamine, Mineralstoffe wie Kalium, Natrium, Magnesium, Chlorid, Sulfate, Phosphate, Kalzium, Carbonate, und/oder essentielle Spurenelemente, wie Eisen, Kupfer, Jod oder dgl. enthalten. Bei Bedarf sind auch Zucker oder Zuckeraustauschstoffe Bestandteil der pulverförmigen Feinstoffe, und zwar insbesondere dann, wenn es auf das Haftvermögen von Zucker ankommt.

Von besonderer Bedeutung für die Erfindung ist das Herstellungsverfahren gemäß Anspruch 5, wonach auf das Trägermaterial in ungegartem oder gegartem Zustand pulverförmige Feinstoffe in ebenfalls ungegartem oder gegartem Zustand "an- bzw. aufgeteigt" werden, indem das Trägermaterial zunächst allseits befeuchtet wird, um dann mit einer ersten Feinstoff-Schicht versehen zu werden, das so beschichtete Trägermaterial erneut befeuchtet wird, um dann mit einer weiteren Feinstoff-Schicht gleicher oder unterschiedlicher Konsistenz und/oder Zusammensetzung versehen zu werden, wobei dieser Vorgang so lange wiederholt wird, bis eine vorbestimmte Feinstoff-Schicht aufgetragen ist und wobei der Feinstoff unter gleichzeitiger oder nachfolgender Verdichtung, insbesondere mechanischer Verdichtung, stabilisiert wird. Anschließend wird das mit Feinstoff aufgeteigte Trägermaterial bei Unterdruck dehydriert unter Ausbildung eines weitgehend offenporigen Feinstoff-Überzuges. Es handelt sich um einen sogenannten "aufgepoppten" Überzug. Dabei ist darauf zu achten, daß der Feinstoff langsam auf das befeuchtete Trägermaterial aufgebracht wird. Die aufzubringende Feinstoffmenge steht hierbei in direktem Verhältnis zu der befeuchteten Trägeroberfläche. Weder die Benetzung noch der Feinstoffauftrag soll im Überschuß erfolgen; dies würde zur sofortigen Agglomeratbildung führen. Die Stabilisierung der einzelnen Schichten durch mechanische Verdichtung gemäß Anspruch 6 oder 7 ist für die Haltbarkeit des hergestellten Produkts von Bedeutung. Durch das erfindungsgemäße "Aufteigen" wird eine relativ zähe Feinstoff-Schicht hergestellt, die bei der Dehydrierung die Sublimation auf Kosten einer vorherigen Produktdehnung zum einen verzögert, zum anderen die Ausbildung eines offenporigen Überzuges fördert. Der Überzug "poppt" regelrecht auf. Zähe Schichten können über einen höheren Protein- bzw. Zuckergehalt des Feinstoffes bzw. der jeweiligen Feinstoff-Schicht(en) und zusätzlich über intensive mechanische Verdichtung der entsprechenden Schichten erzielt werden. Die mechanische Verdichtung erfolgt entweder beim Dragiervorgang innerhalb einer drehangetriebenen Dragiertrommel oder dadurch, daß das mit Feinstoff beschichtete Trägermaterial über mechanische Hindernisse geleitet wird. Letztgenannte Maßnahmen sind insbesondere bei der Anwendung eines kontinuierlichen Fließbettverfahrens angebracht. Die Adhäsion beim sogenannten "An- bzw. Aufteigen" der Feinstoffe erfolgt mit möglichst niedriger Teigausbeute TA. Darunter versteht man das Verhältnis "Feinstoff zu Wasser", wobei auf den Feinstoff stets 100 Teile vorgegeben werden. Ein TA 150 bedeutet z. B. 100 Teile Feinstoff + 50 Teile Wasser. Je nach Zusammensetzung des Feinstoffes ändert sich die TA. Feinstoffe, welche kein Wasser aufnehmen können, wie z. B. Fettpulver, müssen mit den nötigen Anteilen wasserlöslicher Substanzen, z. B. Proteine oder Zucker, versehen werden. Dies gilt auch für Feinstoffe, welche einen zu geringen Anteil an Proteinen bzw. Zuckerstoffen aufweisen.

Wie bereits oben erwähnt, soll eine hohe Löslichkeit des erfindungsgemäßen Produktes erhalten werden. Dementsprechend ist die offenporige Struktur des Überzuges bzw. dessen Kapillarität von Bedeutung. Dadurch kann das Lösungsmedium sehr schnell in den Überzug eindringen und diesen auflösen sowie gegebenenfalls aufquellen.

Die Ausbildung des offenporigen Überzuges erfolgt in einer Umgebung niedrigen Drucks, insbesondere in einer Umgebung mit einem Druck von 4,0 bis 0,01 mbar. Bei einem Druck von etwa 4,0, insbesondere 2,0 bis 0,2 mbar kommt es zur Sublimation. Feuchtigkeit wird mehr oder weniger schnell in Abhängigkeit von der Temperatur des Produktes diesem und dem Überzug entrissen. Diese Physikalische Tatsache kann nun durch bestimmte "zähgehaltene Feinstoff-Schichten" zur Strukturgebung ausgenutzt werden, und zwar in der oben beschriebenen Weise.

Dieser Effekt kann auch mit höherem Druck erreicht werden, wenn das Produkt vorher erwärmt wird. Eine andere Möglichkeit ist das Durchschleusen des Produktes durch ein Mikrowellenfeld bei Umgebungsdruck oder im Unterdruck. Hierbei wird das im Produkt befindliche Wasser sehr schnell zum Kochen gebracht. Der nach außen drängende Wasserdampf bläht das Produkt auf, und es entstehen die oben angegebenen Strukturen. Dieses Verfahren eignet sich besonders, wenn der Träger in rohem Zustand vorliege, z. B. frische Apfelstücke, welche im feuchten Zustand ummantelt und anschließend einer Lufttrocknung unterzogen werden. Hier kann je nach Bedarf eine entsprechende offenporige Struktur durch ein der Lufttrocknung vorgeschaltetes bzw. integriertes Mikrowellenfeld erreicht werden.

Erfindungsgemäße Halbfabrikate müssen mit möglichst niedriger TA hergestellt werden, und zwar im Regelfall mit einem TA = 104 bis 130. Vergleichsweise beträgt die TA in der Bäckerei etwa 150. Nach Erstellung der Halbfabrikate sollten diese sofort getrocknet bzw. tiefgefroren werden, um die Funktion der an- bzw. aufgeteigten Zutaten für die spätere Verarbeitung nicht zu beeinträchtigen.

Während der Herstellung der erfindungsgemäßen Produkte wird die Restfeuchte um etwa 4 bis 20% erhöht. Das heißt: theoretisch wäre ein Abtrocknen der Produkte um diese 4 bis 20% ausreichend, um das Herstellungsverfahren abzuschließen. Aus Gründen der Produkthaltbarkeit hat es sich aber ergeben, daß ein Abtrocknen des gesamten Produktes auf eine Restfeuchte von etwa 3% (gesamte Abtrocknung ca. 10 bis 15%) von Vorteil ist. Auf jeden Fall sollte die Restfeuchte nicht mehr als 10% einerseits und nicht weniger als 2% andererseits betragen.

Nachstehend wird eine Ausführungsform eines erfindungsgemäßen Lebens- oder Futtermittel-Halbprodukts sowie eine Vorrichtung zum Herstellen eines solchen Produkts anhand der beigefügten Zeichnung näher erläutert. Es zeigen:
- Fig. 1: ein erfindungsgemäß ausgebildetes Lebens- oder Futtermittel-Halbprodukt im Schnitt;
- Fig. 2: eine Dragiervorrichtung zur Herstellung eines Lebens- oder Futtermittel-Halbprodukts gemäß Fig. 1 im schematischen Längsschnitt; und
- Fig. 3: die Vorrichtung gemäß Fig. 1 in Vorderansicht gemäß Pfeil III in Fig. 2.

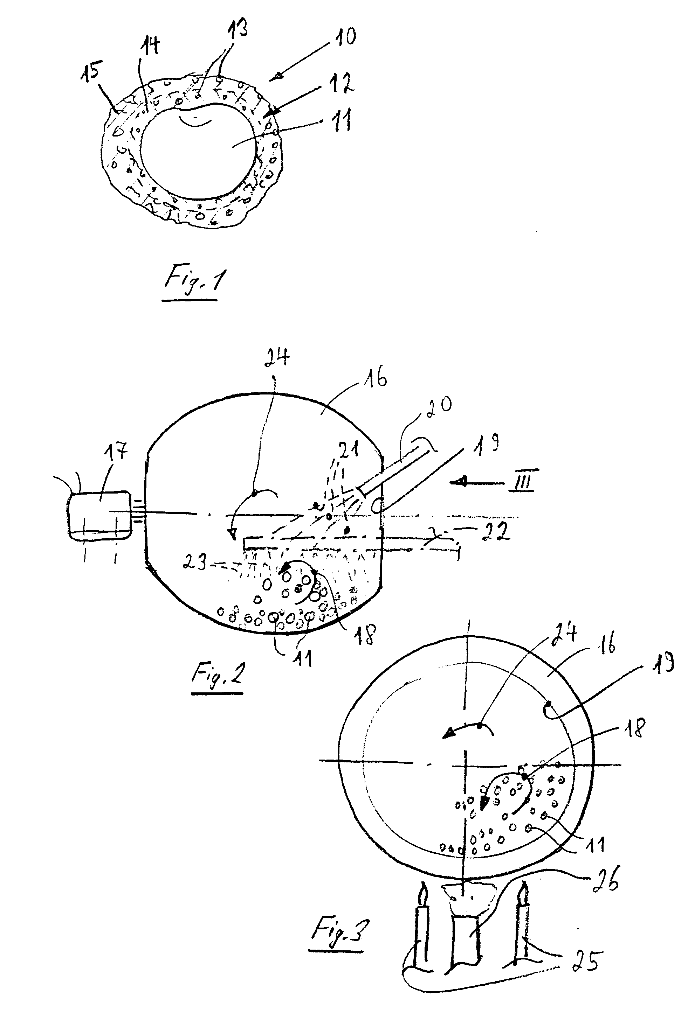

In Fig. 1 ist ein Lebens- oder Futtermittel-Halbfabrikat 10 im schematischen Schnitt dargestellt. Dieses Halbfabrikat umfaßt alt Trägermaterial 11 eine z. B. gefriergetrocknete Johannisbeere. Diese ist mit einem eßbaren Überzug 12 versehen. Dieser Überzug ist auf pulverförmigen Feinstoffen in ungegartem Zustand hergestellt. Er weist eine weitgehend offenporige Struktur bzw. Kapillarstruktur auf. Diese Struktur ist in Fig. 1 mit den Poren 13 dargestellt. Im vorliegenden Fall umfaßt der Überzug 12 zwei Schichten 14, 15, die eine unterschiedliche Konsistenz oder Zusammensetzung von Feinstoffen aufweisen können. So enthält z. B. die innerste Schicht 14, die unmittelbar auf die Oberfläche des Trägermaterials 11 aufgebracht ist, einen relativ hohen Zuckeranteil. Dadurch wird das Trägermaterial 11 durch die innerste Schicht 14 regelrecht eingekapselt. Die äußere Schicht 15 kann demgegenüber vorwiegend Aromastoffe enthalten, z. B. Erdbeer- oder Heidelbeer-Aroma. Auf diese Weise läßt sich in Verbindung mit dem Aroma des Trägermaterials 11, hier schwarze Johannisbeere, eine Art Aroma-Komposition herstellen. Bezüglich der Zusammensetzung der einzelnen Schichten gibt es praktisch keine Grenzen, solange die hier verarbeitbaren Feinstoffe verwendet werden, nämlich
- Stärke,
- Aroma- und Geschmacksstoffe,
- Quellmittel, Dickungsmittel, Emulgatoren,
- Enzym- und/oder Bakteriencompounds,
- Vitamine, Mineralstoffe, wie Kalium, Natrium, Magnesium, Calcium, etc., und/oder essentielle Spurenelemente, wie Eisen, Jod, etc., und/oder Antioxidantien, und/oder Proteincompounds,
- Frucht-, Gemüse-, Fleisch- und/oder Fischpulver,
- Fette, und/oder
- Zucker.

Als Trägermaterial 11 können alle Arten von dehydrierten Lebens- oder Futtermitteln verwendet werden. Im Rahmen der hier fraglichen Produkte soll das Trägermaterial stückig oder grobkörnig sein. Dementsprechend eignen sich als Trägermaterial vor allem getrocknete und/oder kandierte Früchte, getrocknete Fleisch-, Fisch- oder Gemüsestücke oder Mischungen davon, stückige oder grobkörnige Lebens- oder Futtermittel-Komprimate, -Agglomerate, oder auch naturbelassene Lebens- oder Futtermittel mit niedrigem Wassergehalt, wie z. B. Nüsse.

Von ganz wesentlicher Bedeutung ist, daß es sich bei dem Produkt gemäß Fig. 1 um ein Trockenprodukt handelt, welches sich durch eine hohe Haltbarkeit auszeichnet und welches keine enzymatischen, biologischen oder bakteriellen Reaktionen erlaube. Diese werden durch den Überzug 12 verhindert. Darüber hinaus ist wichtig, daß der Überzug 12 eine Kapillarstruktur aufweist, so daß Lösungsmedium sehr schnell in den Überzug eindringen und diesen auflösen kann.

Um von einem Trockenprodukt zu sprechen, ist dieses auf eine Restfeuchte von nicht mehr als etwa 2 bis 8%, insbesondere etwa 3 bis 5% eingestellt.

Anhand der Fig. 2 und 3 wird eine Möglichkeit für die Herstellung eines Lebens- oder Futtermittel-Halbfabrikats gemäß Fig. 1 näher beschrieben:

Zur Herstellung eines Lebens- oder Futtermittel-Halb- oder -Endproduktes entsprechend Fig. 1 werden in eine drehangetriebene Dragiertrommel 16 stückige Trägermaterialien 11 in ungegartem - für Halbfabrikate - oder verzehrfähigem, insbesondere gegartem - für Endprodukte - Zustand eingefüllt und innerhalb der Dragiertrommel mit pulverförmigen Feinstoffen in ebenfalls ungegartem bzw. gegartem Zustand "aufgeteigt". Der Drehantrieb für die Dragiertrommel 16 ist in Fig. 2 mit der Bezugsziffer 17 gekennzeichnet. In der Regel wird dafür ein geregelter Elektromotor verwendet.

Durch die Drehbewegung der Dragiertrommel wird das Trägermaterial 11 in Drehrichtung mitgenommen, so wie dies in Fig. 3 dargestellt ist. Etwa auf halber Höhe der Drehtrommel stürzt das mitgenommene Trägermaterial wieder zurück entsprechend den Pfeilen 18 in den Fig. 2 und 3. Aufgrund dieser Mitnahme- und Umkehrbewegung entsprechend Pfeil 18 befindet sich das Trägermaterial 11 in ständiger Umwälzung. In diesem Zustand wird das Trägermaterial zunächst allseitig befeuchtet, insbesondere mit Wasser oder Milch oder dgl. Flüssigkeit. Zu diesem Zweck ragt durch die vordere Zugangsöffnung 19 der Dragiertrommel 16 in diese eine Flüssigkeits-Sprühdüse 20 hinein. Der Sprühkegel ist in Fig. 2 mit der Bezugsziffer 21 gekennzeichnet. Durch die erwähnte Umwälzung des Trägermaterials 11 wird dieses über die gesamte Oberfläche etwa gleichmäßig befeuchtet. Anschließend wird das oberflächenseitig befeuchtete Trägermaterial mit einer ersten Feinstoff-Schicht versehen. Zu diesem Zweck wird pulverförmiger Feinstoff in die umlaufende Dragiertrommel 16 eingeleitet. Die entsprechende Feinstoff-Zufuhrleitung ist in Fig. 2 mit der Bezugsziffer 22 gekennzeichnet. Die Feinstoff-Entladung über dem sich umwälzenden Trägermaterial ist mit der Bezugsziffer 23 versehen.

Durch die ständige Umwälzung des Trägermaterials dank der Rotation der Dragiertrommel 16 in Richtung des Pfeiles 24 wird der aufgebrachte Feinstoff auf der Oberfläche des Trägermaterials stabilisiert bzw. verdichtet. Der Verdichtungsgrad hängt zum einen von der Intensität der Befeuchtung des Trägermaterials und zum anderen von dem Feinstoffmaterial selbst sowie der Umwälzdauer ab. Auch spielt die Drehgeschwindigkeit der Dragiertrommel 16 eine nicht unerheblich Rolle für die Intensität der Verdichtung der in der beschriebenen Weise aufgeteigten Feinstoff-Schicht. Bei Bedarf kann dieser Vorgang beliebig oft wiederholt werden, bis eine ausreichend dicke Feinstoff-Schicht vorliegt. Das Aufteigen von Feinstoff auf das Trägermaterial erfolgt also schichtweise, wobei die Konsistenz und/oder Zusammensetzung der einzelnen Schichten unterschiedlich sein kann.

Bei Bedarf kann das Aufteigen zusätzlich beeinflußt werden durch Erhöhung oder Absenkung der Temperatur innerhalb der Dragiertrommel. Die entsprechenden Maßnahmen dafür sind in Fig. 3 mit den unterhalb der Dragiertrommel 16 angeordneten Bunsenbrennern 25 einerseits sowie der Düse 26 für den Austritt eines Kühlmediums, z. B. flüssigen Stickstoffs oder flüssigen CO₂ andererseits angedeutet. Natürlich werden in einer Großproduktionsanlage dafür andere Maßnahmen ergriffen, z. B. die Verwendung von elektrischen Heizstäben statt der erwähnten Bunsenbrenner bzw. die Einleitung eines Kühlmediums unmittelbar in die Dragiertrommel 16 hinein. Insofern möge die Darstellung in Fig. 3 nur als Andeutung für die beschriebenen Temperatur-Maßnahmen verstanden werden. Die Prozeßtemperatur hängt von den verwendeten Feinstoffen einerseits sowie dem Trägermaterial andererseits ab.

Nach dem Aufteigen der gewünschten Feinstoffe auf das Trägermaterial erfolgt eine Dehydrierung bei Unterdruck derart, daß die aufgeteigte Schicht "aufpoppt" unter Ausbildung eines weitgehend offenporigen Feinstoff-Überzuges. Das erwähnte "Aufpoppen" erfolgt in einer Unterdruckkammer. Zur Beschleunigung des Prozesses kann das beschichtete Trägermaterial auf Heizplatten innerhalb der Unterdruckkammer plaziert werden. Nach Erreichen eines vorbestimmten Drucks von z. B. 3,5 mbar werden die Heizplatten eingeschaltet. Dadurch wird die Dehydrierung innerhalb der Unterdruckkammer ganz erheblich beschleunigt. Das Aufpoppen beginnt bei einem Unterdruck von etwa 4,0 bis 0,01 mbar.

Die auf das Trägermaterial aufgeteigte Feinstoff-Schicht ist relativ zäh, wobei die Zähigkeit von Wassergehalt und/oder Zusammensetzung der Feinstoff-Schicht sowie der Dicke und dem Verdichtungsgrad derselben abhängt. Diese zähe Feinstoff-Schicht verzögert die beschriebene Dehydrierung bzw. Sublimation. Durch den Unterdruck wird die zähe Feinstoff-Schicht unter zunächst geringer Dehydrierung radial gedehnt. Im weiteren Verlauf, d. h. bei zunehmendem Unterdruck bzw. zunehmender Evakuierung bildet sich eine weitgehend offenporige Struktur aus. Die Feinstoff-Schicht "poppt" also auf. Wie bereits erwähnt, können zähe Feinstoff-Schichten durch einen höheren Protein- bzw. Zuckergehalt des Feinstoffs und zusätzlich durch intensive mechanische Verdichtung (längerer Dragiervorgang) erzielt werden. Werden als Trägermaterial und Feinstoff jeweils gegarte Produkte verwendet, erhält man auf die beschriebene Weise ein verzehrfähiges strukturiertes, ohne Zugabe von CO₂-bildenden Stoffen, wie Hefe, Sauerteig, Ammonium oder dgl. Endprodukt. Es sei noch darauf hingewiesen, daß bei Backwaren zur Lockerung der Feinstoff-Schicht vorzugsweise CO₂-bildende Stoffe, wie Hefe, Sauerteig, Ammonium etc. zugegeben werden müssen.

Wie ebenfalls bereits oben dargelegt, sollten die Lebensoder Futtermittel-Halbfabrikate mit möglichst niedriger TA hergestellt werden, nämlich einer TA von maximal etwa 104 bis 112. Nach Herstellung sollten die Halbfabrikate sofort getrocknet bzw. tiefgefroren werden, um die Funktion der angeteigten Zutaten für ihre spätere Verarbeitung nicht zu beeinträchtigen.

Im Zusammenhang mit den Fig. 2 und 3 wurde das Aufteigen innerhalb einer Dragiereinrichtung beschrieben. Stattdessen kann das Aufteigen auch in einem kontinuierlichen oder chargenweisen Fließbettverfahren oder Überzugsverfahren erfolgen, wobei dann zur Verdichtung der Feinstoff-Schicht(en) das beschichtete Trägermaterial vorzugsweise über mechanische Hindernisse geleitet wird.

Zusammenfassend sei festgehalten, daß sich die vorliegende Erfindung auf getrocknete, entmischungssichere Lebens- oder Futtermittel-Halbfabrikate mit stückiger und pulverförmiger Zusammensetzung einerseits, getrocknete, verzehrfähige Endprodukte mit Struktur andererseits bezieht. Letztgenannte Endprodukte können einerseits ein getrockneter, strukturierter Zutatenverbund mit einstellbaren Lösungsbedingungen oder andererseits ein getrocknetes, strukturiertes Endprodukt selbst sein. Die Lösungsgeschwindigkeit des erwähnten Zutatenverbundes kann durch strukturgebende Produktgestaltung individuell eingestellt werden. Es können auch Lösungsabläufe in vorbestimmter Reihenfolge festgelegt werden. Ebenso können Sperrschichten einen Lösungsvorgang verzögern oder das Trägermaterial vor Erweichung schützen. Technologisch wichtige Verfahrensschritte zur Produktzubereitung können durch eine entsprechende Tektonik des Produkts gewährleistet werden. Die Einsatzbereiche und Zubereitung der Halbfabrikate können wie folgt angegeben werden:
- Instantprodukte mit extrem schnellen Zubereitungszeiten und sofortiger Löslichkeit;
- Einstreuen der Produkte in kaltes Wasser, schnelles Erwärmen bis zum Kochen mit einer Kochzeit von etwa einer Minute;
- Einstreuen der Produkte in kochendes Wasser und kurzes Aufkochen;
- Einstreuen der Produkte in kalte Lösungsmedien (Wasser, Milch, Sahne, Joghurt, Käsesubstrat, etc.);
- Instantprodukte mit verzögerter Löslichkeit bestimmter Funktionsschichten;
- Primärlösung von Gewürzschichten vor Lösung von Bindesystemen;
- Instantprodukte mit Flüssigkeits-Sperrbeschichtung, z. B. für die Herstellung eines Walnußeises mit knackigen Walnußstücken als Trägermaterial. Hier wird als erstes das Trägermaterial (Walnußstücke) mit einer Wassersperrschicht (Hartfett) überzogen; anschließend werden die Zutaten für die Eismasse aufgetregen.
- Produkte mit Säure- und/oder Temperatursperrschicht, z. B. Enzym- und/oder Bakterienkompound-Schicht, welche mit einer bis zu einem gewissen pH-Wert säureresistenten Proteinschicht und/oder einer Fettschicht, deren Schmelzpunkt auf die Lösungstemperatur eingestellt ist, überzogen wird. Derartige Produkte können dadurch einer Fermentation von Beginn an zugegeben werden. Als Trägermaterial können Komprimate oder Agglomerate aus Maltodextrin oder dgl. lebens- oder futtermitteltechnischen Produkten Anwendung finden.

Die Verwendung der beschriebenen Lebens- oder Futtermittel-Produkte ist also abhängig davon, ob ein Halbprodukt oder Fertig- bzw. Endprodukt vorliegt, welches unmittelbar eßbar, kaubar und/oder lutschbar ist.

Die erwähnten Instantprodukte sind im Rahmen der beschriebenen Erfindung Halbfabrikate. Das Endprodukt wird unter Auflösung des Halbfabrikats bzw. Instantprodukts in Wasser, Milch oder dgl. erhalten.

Die beschriebenen Produkte können auch als Back- und Kochhilfsmittel oder -Zutaten Verwendung finden.

Es sei schließlich noch darauf hingewiesen, daß der "aufgepoppte" Überzug des Trägermaterials äußerst abriebfest ist. Die Abriebfestigkeit kann noch dadurch erhöht werden, daß vor dem "Aufpoppen" zumindest die letzte Feinstoff-Schicht stark verdichtet wird, so daß sich diese auch im "aufgepoppten" Zustand relativ kompakt darstellt.

Es sei ausdrücklich darauf hingewiesen, daß es im Rahmen der Erfindung liegt, Produkte herzustellen, die einen Aufbau bzw. eine Struktur besitzen wie die vorbeschriebenen Produkte, die vorzugsweise nach einem Verfahren der vorgenannten Art herstellbar sind und die als Schädlingsbekämpfungsmittel, Heilmittel, insbesondere Naturheilmittel, Düngemittel, kosmetische Mittel, technische Füllstoffe oder dgl. dienen. Für diese weiteren Anwendungsbereiche der Erfindung wird ebenfalls Schutz beansprucht. Sämtliche in den Anmeldungsunterlagen erwähnten Merkmale werden als erfindungswesentlich beansprucht, soweit sie einzeln oder in Kombination nicht aus dem Stand der Technik bekannt sind.

### Bezugszeichenliste

- 10: Lebens- oder Futtermittel-Halbfabrikat
- 11: Trägermaterial
- 12: Überzug
- 13: Poren
- 14: Überzugsschicht
- 15: Überzugsschicht
- 16: Dragiertrommel
- 17: Drehantrieb
- 18: Pfeil
- 19: Dragiertrommel-Zugangsöffnung
- 20: Flüssigkeits-Sprühdüse
- 21: Sprühkegel
- 22: Feinstoff-Zufuhrleitung
- 23: Feinstoff-Entladung
- 24: Pfeil
- 25: Bunsenbrenner bzw. Heizeinrichtung
- 26: Düse für den Austritt eines Kühlmediums

## Patentansprüche

1. Lebens- oder Futtermittel-Halb- oder -Endprodukt, bestehend aus einem stückförmigen oder grobkörnigen Trägermaterial, welches mit einem eßbaren Überzug versehen ist,
**dadurch gekennzeichnet, daß**
- das Trägermaterial in ungegartem oder gegartem Zustand vorliegt, und daß
- der Überzug aus pulverförmigen Feinstoffen in ungegartem oder gegartem Zustand hergestellt ist und eine weitgehend offenporige Struktur aufweist, wobei
- das Produkt auf eine Restfeuchte von etwa 2 % bis 8 %, insbesondere etwa 3 % bis 5 %, eingestellt ist.

2. Lebens- oder Futtermittel-Produkt nach Anspruch 1,
**dadurch gekennzeichnet, daß**
der Überzug wenigstens zwei Schichten gleicher oder unterschiedlicher Konsistenz, insbesondere Zusammensetzung von Feinstoffen, umfaßt.

3. Lebens- oder Futtermittelprodukt nach Anspruch 1 oder 2,
**dadurch gekennzeichnet, daß**
als Trägermaterial dehydratisierte Lebens- oder Futtermittelstücke, insbesondere getrocknete und/oder kandierte Früchte, getrocknete Fleisch-, Fisch- oder Gemüsestücke oder Mischungen davon, stückige oder grobkörnige Lebens- oder Futtermittel-Komprimate, - Agglomerate, oder naturbelassene Lebens- oder Futtermittel mit niedrigem bzw. mittlerem Wassergehalt, wie Nüsse, Apfelstücke oder dergleichen, dient.

4. Lebens- oder Futtermittelprodukt nach einem der Ansprüche 1 bis 3,
**dadurch gekennzeichnet, daß**
die pulverförmigen Feinstoffe für den Überzug
- Stärke;
- Aroma- und Geschmacksstoffe;
- Quellmittel;
- Dickungsmittel;
- Emulgatoren;
- Enzym- und/oder Bakteriencompounds;
- Vitamine; Mineralstoffe, wie Kalium, Natrium, Magnesium, Calcium, oder dergleichen und/oder essentielle Spurenelemente, wie Eisen, Jod, oder dergleichen, und/oder Antioxidantien, und/oder Proteincompounds;
- Frucht-, Gemüse-, Fleisch- und/oder Fischpulver;
- Fette; und/oder
- Zucker
enthalten oder aus diesen Substanzen hergestellt sind.

5. Verfahren zur Herstellung eines Lebens- oder Futtermittel-Halb- oder -Endprodukts bestehend aus einem stückförmigen oder grobkörnigen Trägermaterial, welches mit einem eßbaren Überzug versehen ist,
**dadurch gekennzeichnet, daß**
a) auf das Trägermaterial in ungegartem oder gegartem Zustand pulverförmige Feinstoffe in ebenfalls ungegartem oder gegartem Zustand "aufgeteigt" werden, indem das Trägermaterial zunächst allseits befeuchtet wird, um dann mit einer ersten Feinstoff-Schicht versehen zu werden, das so beschichtete Trägermaterial erneut befeuchtet wird, um dann mit einer weiteren Feinstoff-Schicht gleicher oder unterschiedlicher Konsistenz und/oder Zusammensetzung versehen zu werden, wobei dieser Vorgang so lange wiederholt wird, bis eine vorbestimmte Feinstoff-Schicht aufgetragen ist, und wobei der Feinstoff-Auftrag unter gleichzeitiger oder nachfolgender Verdichtung, insbesondere mechanischer Verdichtung, stabilisiert wird, und daß anschließend
b) das mit Feinstoff aufgeteigte Trägermaterial bei Unterdruck dehydratisiert wird unter Ausbildung eines weitgehend offenporigen Feinstoff-Überzugs.

6. Verfahren nach Anspruch 5,
**dadurch gekennzeichnet, daß**
das Aufteigen unter ständiger Umwälzung des Trägermaterials innerhalb einer Dragiereinrichtung, insbesondere einer drehangetriebenen Dragiertrommel, erfolgt.

7. Verfahren nach Anspruch 5,
**dadurch gekennzeichnet**, da
das Aufteigen im kontinuierlichen oder chargenweisen Fließbett- oder Überzugsverfahren erfolgt, wobei zur Verdichtung der Feinstoffschicht(en) das beschichtete Trägermaterial - insbesondere beim kontinuierlichen Fließbett- oder Überzugsverfahren - über mechanische Hindernisse geleitet wird.

8. Verfahren nach einem der Ansprüche 5 bis 7,
**dadurch gekennzeichnet, daß**
das Aufteigen je nach Konsistenz und/oder Zusammensetzung unter Erhöhung oder Absenkung (Kühlung) der Betriebstemperatur durchgeführt wird.

9. Verfahren nach einem der Ansprüche 5 bis 8,
**dadurch gekennzeichnet, daß**
die Befeuchtung in einem "stöchiometrischen" Verhältnis zum Feinstoff-Auftrag bzw. zur jeweiligen Feinstoffmenge erfolgt, d. h. in einem Verhältnis, das eine maximale Aufnahme von Flüssigkeit, insbesondere Wasser, in der jeweils aufgebrachten Feinstoffmenge erlaubt.

10. Verfahren nach einem der Ansprüche 5 bis 9,
**dadurch gekennzeichnet, daß**
die Befeuchtung unter Verwendung von Wasser, Milch, Fruchtsäften, oder dergleichen konsumierbaren Flüssigkeiten erfolgt.

11. Verfahren nach einem der Ansprüche 5 bis 10,
**dadurch gekennzeichnet, daß**
die Dehydratisierung des beschichteten Trägermaterials bei einem Unterdruck von etwa 4,0 bis 0,01 mbar und einer Temperatur von etwa -50°C bis etwa +50°C je nach Konsistenz und/oder Zusammensetzung der aufgeteigten Feinstoff-Schicht durchgeführt wird.

12. Verfahren nach einem der Ansprüche 5 bis 11,
**dadurch gekennzeichnet, daß**
das Aufteigen des Feinstoffs bei minimaler Teigausbeute TA von 104 bis etwa 130 erfolgt, wobei die Teigausbeute TA das Verhältnis von Feinstoff zu Wasser ist und auf den Feinstoff stets 100 Teile vorgegeben sind, d. h. TA = 104 soviel bedeutet wie 100 Teile Feinstoff und 4 Teile Wasser oder dergleichen Flüssigkeit (Lösungsmittel).

13. Verfahren nach Anspruch 12,
**dadurch gekennzeichnet, daß**
bei Verwendung von Feinstoffen, welche kein Wasser aufnehmen können, wie z. B. Fettpulver, diese mit ausreichend Anteilen von wasserlöslichen Substanzen, wie z. B. Proteinen oder Zucker, versehen werden, so daß ein Aufteigen mit Wasser oder dergleichen konsumierbarer Flüssigkeit möglich ist.

14. Verfahren nach einem der Ansprüche 5 bis 12,
**dadurch gekennzeichnet, daß**
die Dehydratisierung bis zu einer Restfeuchte von 2% bis 8%, insbesondere 3% bis 5%, durchgeführt wird.

15. Verfahren nach einem der Ansprüche 5 bis 14,
**dadurch gekennzeichnet, daß**
als Trägermaterial dehydratisierte Lebens- oder Futtermittelstücke, insbesondere getrocknete und/oder kandierte Früchte, getrocknete Fleisch-, Fisch- oder Gemüsestücke oder Mischungen davon, stückige oder grobkörnige Lebens- oder Futtermittel-Komprimate, -Agglomerate oder naturbelassene Lebens- oder Futtermittel, wie Nüsse oder dergleichen, verwendet werden.

16. Verfahren nach einem der Ansprüche 5 bis 15,
**dadurch gekennzeichnet, daß**
als Feinstoff Pulver verwendet wird, welches die in Anspruch 4 angegebenen Bestandteile einzeln oder in unterschiedlicher Mischung aufweist.

17. Verwendung eines Lebens- oder Futtermittel-Produktes nach einem der Ansprüche 1 bis 4, oder eines Lebens- oder Futtermittel-Produktes hergestellt nach einem Verfahren gemäß einem der Ansprüche 5 bis 16, als
- Instantprodukt zur Auflösung in Wasser (kalt/kochend), Milch, Sahne, Käsesubstrat, Joghurt, oder dergleichen; oder als
- fertiges Eßprodukt, insbesondere Kau- und/oder Lutschprodukt; und/oder als
- Back- und Kochhilfsmittel oder -Zutatenverbund.

18. Anwendung des Verfahrens nach einem oder mehreren der Ansprüche 5 bis 16 zur Herstellung eines Halb- oder Endprodukts entsprechend einem oder mehreren der Ansprüche 1 bis 4 als kosmetische Mittel, als Heilmittel, insbesondere Naturheilmittel, Düngemittel, Schädlingsbekämpfungsmittel, technische Füllstoffe oder dergleichen.

## Claims

1. A semi-finished or finished foodstuff or feedstuff product, consisting of a lump-shaped or coarse-grained substrate that is provided with an edible coating,
**characterized in that**
- the substrate is present in the uncooked or cooked state, and **in that**
- the coating is prepared from powdery fine substances in the uncooked or cooked state, and has a mostly open-cell structure,
- the product being adjusted to a residual moisture of about 2 % to 8 %, in particular of about 3 % to 5 %.

2. The foodstuff or feedstuff product according to claim 1,
**characterized in that**
the coating comprises at least two layers of identical or different consistency, in particular composition, of fine substances.

3. The foodstuff or feedstuff product according to claim 1 or 2,
**characterized in that**
dehydrated foodstuff or feedstuff lumps, in particular dried and/or candied fruits, dried meat, fish or vegetable pieces or mixtures thereof, lumpy or coarse-grained compressed food or feedstuff matters, foodstuff or feedstuff agglomerates or unrefined foodstuff or feedstuff having a low or medium water content, such as nuts, apple pieces or such like, serve as the substrate.

4. The foodstuff or feedstuff product according to any one of claims 1 through 3,
**characterized in that**
the powdery fine substances for the coating contain
- starch;
- aroma and flavoring agents;
- swelling agents;
- thickening agents;
- emulsifiers;
- enzyme compounds and/or bacteria compounds;
- vitamins; mineral substances such as potassium, sodium, magnesium, calcium or such like, and/or essential trace elements such as iron, iodine or such like, and/or antioxidants, and/or protein compounds;
- fruit, vegetable, meat and/or fish powder;
- fats; and/or
- sugar;
or are prepared from these substances.

5. A method of preparing a semi-finished or finished foodstuff or feedstuff product consisting of a lump-shaped or coarse-grained substrate that is provided with an edible coating,
**characterized in that**
a) onto the substrate in the uncooked or cooked state, powdery fine substances likewise in the cooked or uncooked state are "pasted on" **in that** the substrate is first moistened on all sides for being then provided with a first layer of fine substance, the thus coated substrate is then again moistened for being then provided with a further layer of fine substance of an identical or different consistency and/or composition, this process being repeated for so long until a predetermined layer of fine substance is applied, and the application of fine substance being stabilized under simultaneous or subsequent compression, in particular mechanical compression, and **in that** subsequently,
b) the substrate onto which fine substance has been pasted, is dehydrated at low pressure under formation of a mostly open-cell fine substance coating.

6. The method according to claim 5,
**characterized in that**
the pasting on ensues while permanently revolving the substrate within a dragée-coating means, in particular a rotatably driven dragée-coating drum.

7. The method according to claim 5,
**characterized in that**
the pasting on ensues in the continuous or batchwise fluid bed process or coating process, the coated substrate - in particular in the continuous fluid bed process or coating process - being guided over mechanical barriers for the compression of the fine substance layer/s.

8. The method according to any one of claims 5 through 7,
**characterized in that**
the pasting on is effected in dependence on the consistency and/or composition while increasing or decreasing (cooling) the operation temperature.

9. The method according to any one of claims 5 through 8,
**characterized in that**
the moistening ensues in a "stoichiometric" relationship to the fine substance applied and the respective fine substance amount, respectively, i.e. in a relationship permitting a maximum intake of liquid, in particular water, into the fine substance amount applied in each case.

10. The method according to any one of claims 5 through 9,
**characterized in that**
the moistening ensues with the use of water, milk, fruit juices or similar consumable liquids.

11. The method according to any one of claims 5 through 10,
**characterized in that**
the dehydration of the coated substrate is carried out at a low pressure from about between 4.0 and 0.01 mbar, and at a temperature from about -50°C up to +50°C, in each case depending on the consistency and/or composition of the fine substance coat pasted on.

12. The method according to any one of claims 5 through 11,
**characterized in that**
the pasting on of the fine substance ensues at a minimum paste yield PY of 104 up to about 130, the paste yield PY being the relationship of fine substance to water, and always 100 parts being pre-given to the fine substance, i.e. that PY = 104 means as much as 100 parts of fine substance and 4 parts of water or a similar liquid (solvent).

13. The method according to claim 12,
**characterized in that**
with the use of fine substances which are not able to take up water, such as, for example, fat powder, these are supplied with sufficient portions of water-soluble substances, such as, for example, proteins or sugar, so that a pasting on with water or similar consumable liquids is possible.

14. The method according to any one of claims 5 through 12,
**characterized in that**
the dehydration is carried out up to a residual moisture of 2% to 8%, in particular 3% to 5%.

15. The method according to any one of claims 5 through 14,
**characterized in that**
dehydrated foodstuff or feedstuff lumps, in particular dried and/or candied fruits, dried meat, fish or vegetable pieces or mixtures thereof, lumpy or coarse-grained compressed foodstuff or feedstuff matters, foodstuff or feedstuff agglomerates or unrefined foodstuff or feedstuff, such as nuts or such like, serve as the substrate.

16. The method according to any one of claims 5 through 15,
**characterized in that**
as the fine substance, powder is used which comprises the ingredients indicated in claim 4 individually or in a variable mixture.

17. The use of a foodstuff or feedstuff product according to any one of claims 1 through 4, or of a foodstuff or feedstuff product prepared following a method according to any one of claims 5 though 16, as
- an instant product for being dissolved in water (cold/boiling), milk, cream, cheese substrate, yoghurt or such like; or as
- a finished edible product, in particular chewing and/or sucking product; and/or as
- an auxiliary baking and cooking agent or a baking and cooking ingredient compound.

18. The use of the method according to one or several of the claims 5 though 16 for preparing a semi-finished or finished product according to one or several of claims 1 through 4 as cosmetic agent, therapeutic agent, in particular naturopathic agent, fertilizer, insecticide, technical fillers or such like.

## Revendications

1. Produit alimentaire ou fourrager semi-fini ou fini qui est constitué d'un matériau support en forme de morceaux
ou à gros grains, et qui est pourvu d'un revêtement comestible,
**caractérisé en ce que**
- le matériau support est présent à l'état non cuit ou cuit, et que
- le revêtement est préparé de substances fines pulvérisées et à l'état non cuit ou cuit et présente une structure aux pores ouverts en majorité,
- le produit étant réglé pour avoir une humidité résiduelle d'environ 2% à 8% , en particulier d'environ 3% à 5 % .

2. Produit alimentaire ou fourrager selon la revendication 1,
**caractérisé en ce que**
le revêtement comprend au moins deux couches de consistance égale ou variable, en particulier de composition égale ou variable de substances fines.

3. Produit alimentaire ou fourrager selon la revendication 1,
**caractérisé en ce que**
en tant que matériau support servent des morceaux de produits alimentaires ou fourragers déshydratés, en particulier des fruits séchés et/ou confits, des morceaux de viande, de poisson ou de légumes séchés ou des mélanges de ceux-ci, des produits alimentaires ou fourragers comprimés en forme de morceaux ou à gros grains, des produits alimentaires ou fourragers agglomérés, ou des produits alimentaires ou fourragers naturels ayant une teneur en eau basse ou moyenne, comme des noix, des morceaux de pommes ou similaires.

4. Produit alimentaire ou fourrager selon l'une quelconque des revendications 1 à 3,
**caractérisé en ce que**
les substances fines pulvérisées pour le revêtement contiennent
- amidon ;
- aromates artificiels et naturels ;
- agents de gonflement ;
- épaississants ;
- émulsifiants ;
- matériaux composites enzymatiques et ou bactériens ;
- vitamines ; substances minérales comme potassium, sodium, magnésium, calcium et similaires et/ou oligo-éléments essentiels comme fer, iode ou similaires et/ou anti-oxygènes, et/ou matériaux composites de protéines ;
- poudre de fruits, légumes, viande et/ou poisson ;
- graisses ; et/ou
- sucre ;
ou sont préparées à partir de ces substances..

5. Procédé pour la préparation d'un produit alimentaire ou fourrager semi-fini ou fini qui est constitué d'un matériau support en forme de morceaux ou à gros grains, et qui est prévu d'un revêtement comestible,
**caractérisé en ce que**
a) sur le matériau support à l'état non cuit ou cuit, des substances fines également à l'état non cuit ou cuit sont « appliquées sous forme de pâte » **en ce qu'**en premier lieu le matériau support est humidifié pour être ensuite pourvu d'une première couche de substance fine, le matériau support ainsi revêtu est humidifié de nouveau pour être ensuite pourvu d'une autre couche de substance fine de la même ou d'une différente consistance et/ou composition, ledit procédé étant répété aussi longtemps jusqu'à ce qu'une couche déterminée de substance fine ait été appliquée, et l'application de substance fine étant stabilisée sous une compression simultanée ou consécutive, en particulier une compression mécanique, et que subséquemment
b) le matériau support appliqué sous forme de pâte de substance fine est déshydraté sous pression diminuée avec formation d'un revêtement de substances fines largement à des pores ouverts en majorité.

6. Procédé selon la revendication 5,
**caractérisé en ce que**
l'application sous forme de pâte se déroule sous une révolution continuelle du matériau support à l'intérieur d'un système pour dragéifier, en particulier un tambour pour dragéifier amené en rotation.

7. Procédé selon la revendication 5,
**caractérisé en ce que**
l'application sous forme de pâte se déroule dans un procédé - continuel ou par lots - à lit fluidifié ou à revêtement, le matériau support revêtu, en vue de la compression de la/des couche/s de substance fine, étant guidé - en particulier lors du procédé continuel à lit fluidifié ou à revêtement - à travers des obstacles mécaniques.

8. Procédé selon l'une quelconque des revendications 5 à 7,
**caractérisé en ce que**
l'application sous forme de pâte est effectuée selon la consistance et/ou composition en augmentant ou abaissant (refroidissant) la température opérationnelle.

9. Procédé selon l'une quelconque des revendications 5 à 8,
**caractérisé en ce que**
l'humidification se déroule dans une relation "stoechiométrique » par rapport à l'application de substance fine, respectivement à la quantité respective de substance fine, c'est-à-dire dans une relation permettant une absorption maximum de liquide, en particulier d'eau, dans la quantité de substance fine appliquée respective.

10. Procédé selon l'une quelconque des revendications 5 à 9,
**caractérisé en ce que**
l'humidification s'ensuit utilisant de l'eau, du lait, des jus de fruits ou des liquides consommables similaires.

11. Procédé selon l'une quelconque des revendications 5 à 10,
**caractérisé en ce que**
la déshydratation du matériau support revêtu est effectuée à une pression diminuée d'environ 4,0 à 0,01 mbar, et à une température d'environ -50°C à environ +50°C, chaque fois en fonction de la consistance et/ou composition de la couche de substance fine appliquée sous forme de pâte.

12. Procédé selon l'une quelconque des revendications 5 à 11,
**caractérisé en ce que**
l'application sous forme de pâte de la substance fine s'effectue à un rendement de pâte TA minimum de 104 à environ 130, le rendement de pâte TA étant la relation entre la substance fine et l'eau, et 100 parts étant toujours prédéfinies pour la substance fine ; c'est-à-dire que TA = 104 signifie autant que 100 parts de substance fine et 4 parts d'eau ou liquide similaire (solvant).

13. Procédé selon la revendication 12,
**caractérisé en ce que**
lors de l'utilisation de substances fines qui ne sont pas capables d'absorber de l'eau, comme p. ex. graisse en poudre, celles-ci sont suffisamment pourvues de portions de substances solubles dans l'eau , comme p. ex. protéines ou sucre, de manière à ce qu'une application sous forme de pâte avec de l'eau ou un liquide consommable similaire soit possible.

14. Procédé selon l'une quelconque des revendications 5 à 12,
**caractérisé en ce que**
la déshydratation est effectuée jusqu'à une humidité résiduelle de 2% à 8% , en particulier 3% à 5%.

15. Procédé selon l'une quelconque des revendications 5 à 14,
**caractérisé en ce que**
en tant que matériau support sont utilisés des morceaux de produits alimentaires ou fourragers déshydratés, en particulier des fruits séchés et/ou confits, des morceaux de viande, de poisson ou de légumes séchés ou des mélanges de ceux-ci, des produits alimentaires ou fourragers comprimés en forme de morceaux ou à gros grains, des produits alimentaires ou fourragers agglomérés, ou des produits alimentaires ou fourragers naturels comme des noix ou similaires.

16. Procédé selon l'une quelconque des revendications 5 à 15,
**caractérisé en ce que**
en tant que substance fine, une poudre est utilisée présentant les composants indiqués dans la revendication 4 séparément ou en mélange variable.

17. Utilisation d'un produit alimentaire ou fourrager selon l'une quelconque des revendications 1 à 4, ou d'un produit alimentaire ou fourrager préparé d'après un procédé selon l'une quelconque des revendications 5 à 16, en tant que
- produit d'utilisation instantanée pour être dissout dans de l'eau (froide/bouillante), lait, crème, base de fromage, yaourt ou similaires ; ou en tant que
- produit fini comestible, en particulier produit pour être mâché et/ou sucé ; et/ou en tant que
- moyens auxiliaires pour pâtisserie et cuisson ou combinaison d'ingrédients pour pâtisserie et cuisson.

18. Utilisation du procédé selon l'une quelconque ou plusieurs des revendications 5 à 16 pour la préparation d'un produit semi-fini ou fini selon l'une quelconque ou plusieurs des revendications 1 à 4 en tant que moyens cosmétiques, médicaments, en particulier médicaments naturistes, engrais, pesticides, matières de charge techniques ou similaires.
